# EUROPEAN PATENT APPLICATION

(11) **EP 3 258 437 A1**
(43) Date of publication of application: **20.12.2017**
(21) Application number: 17171227.6
(22) Date of filing: 16.05.2017
(51) Int. Cl.: G06Q 30/06

(54) **COMPUTER-ASSISTED METHOD FOR SELECTING A PROGRAM FOR WASHING VEHICLES**

(30) Priority: 14.06.2016 ES 201630811
(71) Applicant: Istobal, S.A., 46250 La Alcudia (Velencia) (ES)
(72) Inventor: TOMAS PUCHADES, Yolanda, 46250 LA ALCUDIA (Valencia) (ES)
(74) Representative: Ungria López, Javier

(57) **Abstract**

Computer-assisted method for selecting a program for washing vehicles, which comprises: displaying on screen a range of levels of dirt of the vehicle; selecting a level of dirt; showing a number of areas of the vehicle that could potentially be dirty; selecting the dirty areas; showing a range of levels of polish; selecting the level of polish; showing a range of levels of drying; selecting a level of drying; assigning a score to each level of dirt, polish and drying, and to each area of the vehicle; assigning a certain weighted level of importance to the levels of dirt, polish and drying, and to the areas of the vehicle; calculating a score for each washing program according to how they suit the needs of the user; selecting the washing programs with the highest scores, and; displaying the washing programs selected.

## Description

### OBJECT OF THE INVENTION

The present description refers to a computer-assisted method for selecting a program for washing vehicles, which helps users at a facility for washing vehicles to select the washing program that is best suited to their needs.

The method that is the object of the present description has applications in the industry in charge of designing, manufacturing, commercialising and exploiting facilities for washing vehicles.

### TECHNICAL PROBLEM TO ADDRESS AND BACKGROUND OF THE INVENTION

Currently, a machine or facility for washing vehicles, and more specifically an automatic machine or facility for washing vehicles, can feature a large number of combinations (typically over a hundred) in order to optimise the process of washing a vehicle, depending on the number of modules present at the washing machine or facility.

These combinations generally depend on the place where the facility is located (hot, humid or cold regions, etc.) or on the services provided by said washing facilities (garages, car-rental companies, major retailers, etc.).

Among the over a hundred combinations available when the machine is configured for a client or user, fifteen of them can be programmed based on the optional modules chosen by the owner of the washing machine/facility.

Naturally, the owners of said machines do not usually add more than 5 or 6 programs since they can become a hassle for the final user (because they need to read which functions each of the washing programs performs), and they can also cause a bottleneck at the facility. Therefore, the owners of the facilities usually indicate in a panel a small number of programs available at their machine so the final user can decide which to choose, spending the least time possible doing so.

In conclusion, not only does the final user lose out on the rest of the combinations that the washing machine/facility can perform, but they also suffer the drawback that they do not know the usefulness of some of the options listed in the preset washing programs.

Currently in the market there are systems for helping the user that operate by means of "add-ons", so that users can add more washing options to a preselected basic program.

The drawback of said systems is that they are aimed at experienced users since most users are unfamiliar with the usefulness of, for example, a prewash, an active foam, etc.

### DESCRIPTION OF THE INVENTION

In order to address the drawbacks mentioned in the previous section, the present invention describes a novel computer-assisted method for selecting a program for washing vehicles.

The method of the present description comprises providing or determining a range of programs for washing vehicles, where each washing program comprises:
∘ washing the vehicle according to a predetermined level of dirt (according to a predetermined washing intensity);
∘ washing a predetermined number of areas of the vehicle;
∘ polishing the vehicle according to a predetermined level of polishing, and;
∘ drying the vehicle according to a predetermined level of drying.

The method of the present description further comprises the following stages:
- showing in a display means (for example, a computer screen) a range of levels of dirt of a vehicle, which are indicative of a level of washing intensity to be applied (as desired/chosen by the user) for the cleaning or washing of the vehicle;
- selecting (by the user) a level of dirt from the range of levels of dirt, which is indicative of the level of dirt of the vehicle of the user and, therefore, also indicative of the level of intensity to be applied (as desired/chosen by the user) for the washing of the vehicle;
- showing in the display means a number of areas of the vehicle that could potentially be dirty;
- selecting (by the user) a number of dirty areas of the vehicle from the range of areas of the vehicle that could potentially be dirty, which is indicative of the areas of the vehicle to be washed as chosen by the user.
- showing in the display means the number of levels of polish of the vehicle;
- selecting (by the user) a level of polish of the vehicle from the range of levels of polish of the vehicle, chosen by the user for the finish of their vehicle;
- showing in the display means the number of levels of drying of the vehicle;
- selecting (by the user) a level of drying of the vehicle from the range of levels of drying of the vehicle, chosen by the user for the finish of the vehicle.

The method comprises assigning a score to each level of dirt shown, to each area of the vehicle that could potentially be dirty, to each level of polish of the vehicle, and to each level of drying of the vehicle.

Typically, the owner of the washing machine/facility is the one who assigns a score to each level of dirt, each area of the vehicle, each level of polish, and each level of drying.

Additionally, the method comprises assigning a certain weighted level of importance to the levels of dirt, the range of areas of the vehicles that could potentially be dirty, the levels of polish and the levels of drying of the vehicle.

According to a preferred embodiment of the method of the present description, it is the users themselves who determine the weighted level of importance they want to assign to the range of levels of dirt (that is, the washing intensity), the areas of the vehicle that could potentially be dirty (the areas of the vehicle to be washed as selected by the user), the range of levels of polish and the range of levels of drying.

For example, a user can indicate that they are interested in getting their vehicle washed followed by polishing and drying, albeit giving a lower priority to these two latter aspects in relation to the importance given to washing areas of the vehicle that they want washed.

The method comprises calculating a score associated with each washing program. Said score of each washing program corresponds to the weighted sum of the following terms:
- A first term corresponding to the weighted level of importance of the range of levels of dirt multiplied by the score of the selected level of dirt of the vehicle. If a specific program is not suitable for washing the vehicle according to the level of dirt selected (according to the intensity required by the user), the value of this first term for said specific program is zero.
- A second term corresponding to the weighted level of importance of the range of areas of the vehicle that could potentially be dirty multiplied by the sum of the scores of each of the areas of the vehicle selected as dirty. If a specific program is not suitable for washing a selected dirty area of the vehicle, the value of said selected dirty area for said specific program is zero.
- A third term corresponding to the weighted level of importance of the range of levels of polish multiplied by the score of the selected level of polish. If a specific program is not suitable for washing the vehicle according to the level of polish selected by the user, the value of said selected level of polish for said specific program is zero.
- A fourth term corresponding to the weighted level of importance of the range of levels of drying the vehicle multiplied by the score of the selected level of drying. If a specific program is not suitable for washing the vehicle according to the level of drying selected by the user, the value of said selected level of drying for said specific program is zero.

Finally, the method comprises selecting from the washing programs a certain number of washing programs that have obtained the highest scores based on the weighted sum (the score of the washing program) calculated previously.

Additionally, the method comprises showing in the display means the washing programs selected in the previous section (those with the highest scores).

The programs with the highest scores are those that best match the preferences selected by the user.

This procedure simplifies the task of selecting which washing program is best suited to the needs of the user, since it is the washing facility itself that suggests to the user, by following the method described, the washing programs that best match their specific requirements.

Preferably, the washing programs shown on the display means are listed in a ranking according to their score, from highest to lowest. In this way, the programs that best match the preferences of the user are shown first.

According to an embodiment of the method of the present description, the number of washing programs shown on the display means equals three. In this way, users only need to select between the three washing programs that best suit their needs.

Preferably, each washing programs shown on the display means also shows the price corresponding to said washing program. In this way, users can choose knowing the price of each specific washing program.

According to what has been detailed in the previous paragraph, users are capable of evaluating if they are interested in choosing a washing program for their vehicle that is perfectly suited to their demands but that has a higher price, or choose a washing program that does not meet their demands as perfectly but that has a better price.

The method already discards for the user those washing programs that are less suited to the demands/preferences of the user.

Typically, the displayed areas of the vehicle that could potentially be dirty include at least the following areas: wheels; underbody; sides; front, and; rear.

In addition, according to one example embodiment, the displayed levels of dirt of the vehicle include at least the following three levels of dirt: low, medium, and high. In this way, by selecting between one or another level, the user indicates if they want their vehicle to be washed at a low, medium or high intensity (depending on how dirty their car is).

According to one example embodiment, the displayed levels of polish of the vehicle include at least the following three levels of polish: normal, shine, extra shine.

Additionally, the displayed levels of drying typically include at least the following three levels of drying: no drying, normal drying, extra drying.

These options mentioned in the last three paragraphs allow the owner of the facility to make savings in materials and products, they allow the user to save money, and they primarily reduce the environmental impact.

According to a preferred embodiment of the method of the present description, the displayed range of areas of the vehicle that could potentially be dirty includes an option corresponding to: "all areas of the vehicle".

Selecting the option "all areas of the vehicle" prevents the user from selecting additional dirty areas from the range of areas of the vehicle that could potentially be dirty.

Typically, the score assigned to the option corresponding to "all areas of the vehicle" is equal to the sum of the scores assigned to the other areas of the vehicle that could potentially be dirty.

In light of this, the method comprises at least one washing program suitable for cleaning all areas of the vehicle.

The present description also refers to a device comprising a processor, a display means and a means for entering data, which is configured to follow the stages of the method described above.

The present description also refers to a digital means comprising instructions to carry out the method described above.

### BRIEF DESCRIPTION OF THE FIGURES

As part of the explanation of at least one of the preferred embodiments of the computer-assisted method for selecting a program for washing vehicles, the following figure has been included:

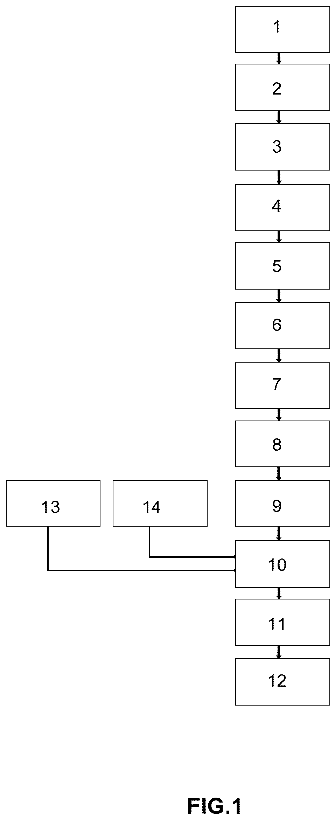

Figure 1: Shows a diagram detailing the steps of the computer-assisted method for selecting a program for washing vehicles.

### DETAILED DESCRIPTION

The present invention refers to, as mentioned above, a computer-assisted method for selecting a program for washing vehicles.

The method of the present description is designed so that the final user of a facility for washing vehicles finds it easier to choose between the different washing options/programs for washing their vehicle, since normally said final user is not familiar with the different options available for selecting a washing program.

Therefore, a new application/product has been designed based on UCD (user-centred design), which allows the user to simply select the level of dirt of their vehicle and the kind of finish they want. Based on these parameters, an algorithm indicates the washing program that is best suited to the needs of the user.

Depending on the choice of the owner of the facility for washing vehicles, 1, 2, 3, 4 or more washing programs can be selected that match to a larger or smaller degree the requirements/needs/demands of the user, so that the users can choose, from between the available different washing methods, the one that is best suited to their needs, optionally also bearing in mind the price of the washing program.

The algorithm used by the present method combines the different physical functionalities of the washing machine/facility based on the range of options/modules that have been incorporated to said facility, and adjusts said functionalities to the washing programs defined by the owner of the facility.

This is achieved preferably by weighting the choice of the user with the aforementioned combination, finally displaying the results that best match the requirements so the user can make a final decision about the washing program they are interested in.

Figure 1 displays a diagram that shows a schematic view of the steps implemented in the computer-assisted method for selecting a program for washing vehicles, which is the object of the present description.

The computer-assisted method for selecting a program for washing vehicles comprises: determining a range of programs (1) available for washing vehicles; showing a range of levels of dirt of a vehicle (2), which are indicative of an intensity level (desired by the user) to be applied for washing the vehicle; selecting a level of dirt (3) from among the aforementioned levels of dirt corresponding to the vehicle of the user; showing a number of areas of the vehicle (4) (dirty areas) to be washed; selecting the areas of the vehicle (5) to be washed; showing a range of levels of polish (6) for the finish of the vehicle; selecting the desired level of polish (7); showing a range of levels of drying (8) for the finish of the vehicle; selecting the desired level of drying (9); calculating a score (10) based on how each washing method available matches the needs selected by the user; selecting the washing programs with the highest scores (11), and; displaying on screen the washing programs selected (12).

In order to calculate the score of each washing program (10) it is necessary to assign a score (14) to the specific level of dirt of the vehicle, to each area of the range of areas that could potentially be dirty, to each possible level of polish for the finish of the vehicle, and to each level of drying for the finish of the vehicle.

In addition, in order to calculate the score of each washing program (10) it is also convenient to assign a weighted level of importance (13) attributed to the level of dirt (chosen degree of washing intensity), to the range of areas to be cleaned (matching the washing program to the chosen range of dirty areas to be cleaned), to the degree or level of polish chosen, and to the degree or level of drying chosen.

Typically, it is the user who assigns the weighted level of importance (13).

In addition, typically the owner of the washing machine/facility is the one who assigns the score (14) to each level of dirt, each area of the vehicle to be cleaned, each level of polish, and each level of drying.

The algorithm used by the method of the present description adds the sum of the options selected by the user or client of the washing facility (for those washing programs that have said options available), and said scores are multiplied by their corresponding weighted levels of importance (typically given as percentages) in order to calculate a global score for each of the washing programs predetermined by the owner or manager of the facility for washing vehicles.

In this way, a score is obtained for each of the washing programs based on how they match the requirements of the client.

Other current existing systems for selecting programs in automatic machines for washing vehicles are based on choosing a basic program on which different options are added on, which increase the price of the wash.

The method of the present description allows the user to indicate how dirty they think their vehicle is, where the dirt is located and what kind of finish they want. Based on this data, the most suitable washing programs are selected so that it is the user who makes the final decision.

The algorithm managing the selection of programs can weight each option so they have more or less weight within the process of selecting the program. In this way, each owner or user of a facility can set their own criteria about which options they consider the most important.

## Claims

1. A computer-assisted method for selecting a program for washing vehicles, **characterized in that** it comprises:
- determining (1) a range of washing programs, where each washing program comprises:
∘ washing the vehicle according to a predetermined level of dirt;
∘ washing a predetermined number of areas of the vehicle;
∘ polishing the vehicle according to a predetermined level of polishing;
∘ drying the vehicle according to a predetermined level of drying;
- showing (2) in the display means the range of levels of dirt of a vehicle;
- selecting (3) a level of dirt of the vehicle from the range of levels of dirt, which is indicative of the washing intensity level to be applied on the vehicle as chosen by the user;
- showing (4) in the display means a number of areas of the vehicle that could potentially be dirty;
- selecting (5) a number of dirty areas of the vehicle from the range of areas of the vehicle that could potentially be dirty, which is indicative of the areas of the vehicle to be washed as chosen by the user;
- showing (6) in the display means the range of levels of polish of the vehicle;
- selecting (7) a level of polish of the vehicle from the range of levels of polish of the vehicle, as chosen by the user for the finish of their vehicle;
- showing (8) in the display means the range of levels of drying of the vehicle;
- selecting (9) a level of drying of the vehicle from the range of levels of drying of the vehicle, as chosen by the user for the finish of their vehicle; where the method comprises assigning a score (13) to each level of dirt shown, to each area of the vehicle that could potentially be dirty, to each level of polish of the vehicle, and to each level of drying of the vehicle;
where the method comprises assigning a certain weighted level of importance (14) to the levels of dirt, the range of areas of the vehicles that could potentially be dirty, the levels of polish and the levels of drying of the vehicle;
where the method comprises calculating (10) a score for each washing program, said score of each washing program corresponding to the weighted sum of the following terms:
- a first term corresponding to: the weighted level of importance of the range of levels of dirt multiplied by the score of the selected level of dirt of the vehicle, where if a specific program is not suitable for washing the vehicle according to the level of dirt selected, the value of the first term for said specific program is zero;
- a second term corresponding to: the weighted level of importance of the range of areas of the vehicle that could potentially be dirty multiplied by the sum of the scores of each of the areas of the vehicle selected as dirty, where if a specific program is not suitable for washing a dirty area of the vehicle selected, the value of said selected dirty area for said specific program is zero;
- a third term corresponding to: the weighted level of importance of the range of levels of polish multiplied by the score of the selected level of polish, where if a specific program is not suitable for finishing washing the vehicle according to the level of polish selected, the value of said selected level of polish for said specific program is zero;
- a fourth term corresponding to: the weighted level of importance of the range of levels of drying the vehicle multiplied by the score of the selected level of drying, where if a specific program is not suitable for finishing washing the vehicle according to the level of drying selected, the value of said selected level of drying for said specific program is zero;
where the method comprises selecting (11) from among the washing programs a determined number of washing programs with the highest scores, and;
showing (12) in the display means the washing programs selected in the previous paragraph.

2. A computer-assisted method for selecting a program for washing vehicles according to claim 1, **characterized in that** the washing programs shown on the display means are listed in a ranking according to their score, from highest to lowest.

3. A computer-assisted method for selecting a program for washing vehicles according to claim 1, **characterized in that** the number of washing programs shown on the display means equals three.

4. A computer-assisted method for selecting a program for washing vehicles according to claim 1, **characterized in that** each washing program shown on the display means also shows the price corresponding to said washing program.

5. A computer-assisted method for selecting a program for washing vehicles according to claim 1, **characterized in that** the displayed areas of the vehicle that could potentially be dirty include at least the following the areas:
∘ wheels;
∘ underbody;
∘ sides;
∘ front, and;
∘ rear.

6. A computer-assisted method for selecting a program for washing vehicles according to claim 1, **characterized in that** the displayed range of levels of dirt of the vehicle includes at least the following three levels of dirt: low, medium, and high.

7. A computer-assisted method for selecting a program for washing vehicles according to claim 1, **characterized in that** the displayed range of levels of polish of the vehicle includes at least the following three levels of polish: normal, shine, extra shine.

8. A computer-assisted method for selecting a program for washing vehicles according to claim 1, **characterized in that** the displayed range of levels of drying typically includes at least the following three levels of drying: no drying, normal drying, extra drying.

9. A computer-assisted method for selecting a program for washing vehicles according to claim 1, **characterized in that** the displayed range of areas of the vehicle that could potentially be dirty includes an option corresponding to all the areas of the vehicle, where selecting said option prevents the user from selecting additional areas from the range of areas of the vehicle that could potentially be dirty, where the score assigned to the option corresponding to all the areas of the vehicle is equal to the sum of the scores assigned to the other areas of the vehicle that could potentially be dirty, and where the method comprises at least one washing program suitable for cleaning all the areas of the vehicle.

10. A computer-assisted device for selecting a program for washing vehicles **characterized in that** it is configured to operate according to the method described in any of the claims 1 to 9.

11. A digital means **characterized in that** it comprises instructions for carrying out the method described in any of the claims 1 to 9.
